# EUROPEAN PATENT SPECIFICATION

(11) **EP 4 292 878 B1**
(45) Date of publication and mention of the grant of the patent: **03.12.2025**
(21) Application number: 22179269.0
(22) Date of filing: 15.06.2022
(51) Int. Cl.: B60N 2/75

(54) **ARMREST FOR A VEHICLE, ASSOCIATED SIDE PANEL AND VEHICLE**
ARMLEHNE FÜR EIN FAHRZEUG, ZUGEHÖRIGE SEITENWAND UND FAHRZEUG
ACCOUDOIR POUR UN VÉHICULE, PANNEAU LATÉRAL ASSOCIÉ ET VÉHICULE

(43) Date of publication of application: 20.12.2023
(73) Proprietor: Volvo Truck Corporation, 405 08 Göteborg (SE)
(72) Inventor: C, Ganapathy Raja, 621216 TIRUCHIRAPPALLI (IN)
(74) Representative: Lavoix

(56) References cited:
- DE-A1- 102019 130 142
- DE-A1- 4 122 188
- ES-A1- 2 157 738
- US-A1- 2016 213 153

## Description

The present invention relates to an armrest for a vehicle, to a side panel comprising such an armrest and to a vehicle comprising such a door panel.

In the field of vehicles, especially road vehicles, the vehicle comprises a body that delimits an interior compartment where seats are arranged for a driver and/or passenger(s) of the vehicle. When a seat is arranged next to a side wall of the body, said side wall is usually covered by a trim panel in order to provide comfort and safety to the person seated in said seat. The side panel usually comprises an arm-resting area, i.e. an armrest.

In order to adapt to the morphologies of different drivers and/or passengers, it is known to include a mechanism to adjust a position of the armrest. Document ES-2 157 738-A1 discloses an adjustable armrest for seats.

DE-41 35 279-A1 describes, for example, a side panel that includes a mechanism to adjust the position of an armrest both along a height axis and along a lateral axis. Such adjustment mechanism, based on rotating gears powered manually by a handle, is relatively complex and costly to produce.

There is therefore a need for improved armrest, which is adjustable in position while remaining cheap to produce and easy to operate.

To this end, aspects of the invention pertains to an armrest for a side panel of a vehicle, especially a road vehicle, the armrest being according to claim 1.

Thanks to the invention, the armrest can be adjusted in height by the user by hand, without any tools, which is very convenient and straightforward, in other words easy to operate. The height adjustment mechanism has a simple structure, with few parts compared to the prior art, making the armrest reliable and cheap to produce.

The invention comprises an armrest for a side panel of a vehicle, especially a road vehicle, the armrest comprising:- a bracket, comprising a main wall configured to be fixed onto the side panel,- a support portion comprising:- an outer wall, which extends parallel to the main wall and which comprises an outer face, oriented toward an interior compartment of the vehicle, and· an upper wall, which extends orthogonally to a height axis of the vehicle and which is configured to provide an arm-resting area to a user of the vehicle,- a mechanism, configured to adjust in height the support portion relatively to the bracket along the height axis, wherein:- the mechanism comprises a notched portion, which is arranged on one element among the bracket and the support portion and which comprises notches, which are stacked along the height axis,- the notched portion (66) is configured to cooperate with a complementary organ, for example a teethed portion, which is arranged on the other element among the bracket and the support portion,- the complementary organ is configured to pass from an engaged configuration, where the complementary organ cooperates with the notched portion and prevents height adjustment movements of the support portion relative to the bracket, to a disengaged configuration, where the complementary organ does not cooperates with the notched portion and does not prevent height adjustment movements of the support portion relative to the bracket,- the adjustment mechanism comprises a flexible zone, arranged either on the bracket or on the support portion, the flexible zone being configured to switch between a relaxed configuration, where the complementary organ is in the engaged configuration, and a deformed configuration, where the complementary organ is moved in the disengaged configuration, and- the flexible zone is configured to pass from the relaxed configuration to the deformed configuration by elastic deformation under the action of an user, by hand and without any tool, whereas the flexible zone tends to elastically return to its relaxed configuration,
the bracket comprises a secondary wall, which extends parallel to the main wall between the outer wall and the main wall, the secondary wall and the main wall limiting between themselves an inner volume of the bracket, the notched portion is arranged on the secondary wall and is oriented toward the inner volume of the bracket, the complementary organ is a teethed portion, which is received in the inner volume of the bracket.

According to advantageous but optional aspects, such a switching device may incorporate one or more of the following features, considered alone or according to any technically allowable combination:
- the notched portion is arranged on the bracket, whereas the complementary organ is arranged on the support portion, and whereas the flexible zone is arranged on the outer wall and is configured to provide a gripping element when the flexible zone is in the deformed configuration, the gripping element being configured for a user to lift the support portion along the height axis.
- The support portion further comprises:
   - lateral guides, which are borne by the upper wall and which arranged along a transverse axis orthogonal to the outer wall,
   - a sliding board, which cooperates with the lateral guides and which is mobile in translation relatively to the support portion along a transverse axis, which is orthogonal to the outer wall, and
   - a secondary mechanism, configured to adjust in position the sliding board relative to the upper wall along the transverse axis, in a lateral adjustment movement,
wherein:
- the secondary mechanism comprises:
   - secondary notches, which are borne by the upper wall and which are facing upwards, each secondary notches extending parallel to each other and orthogonally to the transverse axis, the secondary notches being stacked along the transverse axis,
   - a teethed organ, which is arranged on the sliding board, the teethed organ having a secondary teeth being oriented downwards and being configured to cooperate with the secondary notches,
- the teethed organ is elastically deformable, by a user, between a relaxed configuration and a constrained configuration, the teethed organ being configured to elastically return to its relaxed configuration,
- when the teethed organ is in the relaxed configuration; the teethed organ cooperates with the secondary notches so that lateral adjustment movements of the sliding board are prevented,
- when the teethed organ is in the constrained configuration, the teethed organ does not cooperate with the secondary notches and lateral adjustment movements of the sliding board are possible.
- The support portion comprises a foldable tray, with a lower board and an upper board, which is hinged with the lower board along a hinge axis that is parallel to a longitudinal axis of the vehicle, whereas the lower board is borne by and parallel to the upper wall, and whereas the tray is switchable, by a user, between a folded configuration, where the upper board is folded onto the lower board and forms an arm-resting area for the user, and an unfolded configuration, where the upper board extends next to the lower board, the upper and lower boards forming together a tray for the user.
- The foldable tray comprises pins, which are arranged on an under side of the lower board, whereas the support portion comprises guiding grooves, which receive the pins, the pins being configured to travel within the guiding grooves under the action of a user.
- The guiding grooves are L shaped, with a portion arranged parallel to the transverse axis and a portion arranged parallel to the longitudinal axis.
- The armrest also comprises two stabilizers, which are arranged on both sides of the armrest and which are configured to prevent translation movements of the bearing portion relative to the bracket along the longitudinal axis.

The invention also concerns:
- A side panel of a vehicle, comprising an armrest as previously defined.
- A vehicle, comprising a body with side walls that delimit an interior compartment of the vehicle, wherein at least one of the side walls is covered by a side panel as previously defined.

The invention will be better understood, and other advantages thereof will appear more clearly, in light of the following description of one embodiment of an electrical switching device provided solely as a non-limiting example and done in reference to the appended drawings, in which:
- [Fig 1] figure 1 is a cross section, along a longitudinal plan, of a vehicle comprising a side panel with an armrest according to the invention;
- [Fig 2] figure 2 represents respectively, in two inserts a) and b), a perspective of the side panel of figure 1, with the armrest represented in a first configuration and in a second configuration;
- [Fig 3] figure 3 is a partially exploded perspective of the armrest of figure 1;
- [Fig 4] figure 4 represents respectively, on three inserts a), b) and c), a transversal cross-section of the armrest of figure 2 a) observed along plan IVa on figure 2, a detail of a cross section along plan IVb on figure 2 of the armrest in a third configuration and the detail of insert b) in the first configuration;
- [Fig 5] figure 5 is a perspective view of the armrest of figure 1, observed from an opposite direction and shown in a fourth configuration,
- [Fig 6] figure 6 is a transversal cross section of the armrest of figure 1 along a plan VI on figure 2, and
- [Fig 7] figure 7 is a cross section of the armrest of figure 1 along plan VII on figure 5, and
- [Fig 8] figure 8 represents respectively, in two inserts a) and b), a partially exploded perspective of the armrest of figure 1, with the armrest represented in the first configuration and in the second configuration.

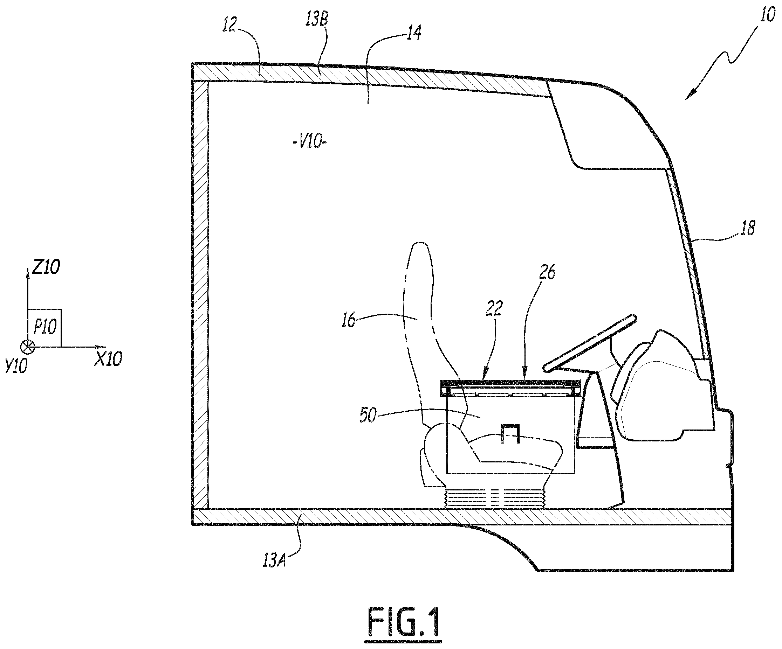

A vehicle 10 is shown on figure 1. The vehicle 10 is here a road vehicle, in particular a truck. Alternatively, the vehicle 10 is a bus or a railroad vehicle, or even a ship or an aircraft. The vehicle 10 comprises a body 12, which is usually made out of metal. The body 12 comprises a floor 13A, a ceiling 13B and side walls, that link the floor 13A to the ceiling 13B. The side walls delimit an interior compartment V10 of the vehicle 10. Figure 1 is a section of the vehicle 10 along a longitudinal plane P10 of the vehicle, and therefore only one side wall 14 is visible.

A seat 16 is arranged within the compartment V10, where a user may take place. In the scope of the present description, a "user" is a person seated in a seat 16 of the vehicle 10, for example a driver or a passenger of the vehicle 10. In the illustrated example, the compartment V10 is a front cabin of a truck, and the seat 16 is a driving seat, whose outline is represented in mixed line and which is represented transparent. The side wall 14 is therefore seen through the seat 16. In a not shown alternative, the interior compartment V10 is a passenger compartment, with one or more seats arranged within the compartment V10.

The vehicle 10 comprises a front window 18 that is oriented toward a front direction X10 of the vehicle 10. By extension, a longitudinal axis of the vehicle 10 is also referenced X10. In the illustrated example, the vehicle 10 is supposed to rest on a horizontal ground. The longitudinal axis X10 is therefore supposed to be horizontal. The description is given in relation to the orientation of the various elements of the vehicle 10 as represented on the figures, knowing that in reality these various elements may be oriented differently.

The longitudinal plane P10 is a vertical plane. A height axis Z10 of the vehicle 10 is an axis that is orthogonal to the longitudinal axis X10 and borne by the longitudinal plane P10. The height axis Z10 is here a vertical axis. A transverse axis Y10 of the vehicle 10 is an axis that is orthogonal to both the longitudinal axis X10 and to the height axis Z10, so that the longitudinal axis X10, transverse axis Y10 and height axis Z10 form together a direct coordinate system. The transverse axis Y10 is here horizontal.

When a user takes place on the seat 16, the side wall 14 is arranged on the left side of the user, and by extension on the left side of the seat 16. The following description is done in relation to the orientation of the side wall 14 as illustrated, knowing that what is valid for the side wall 14 can be transposed to a side wall arranged on the right side of a seat.

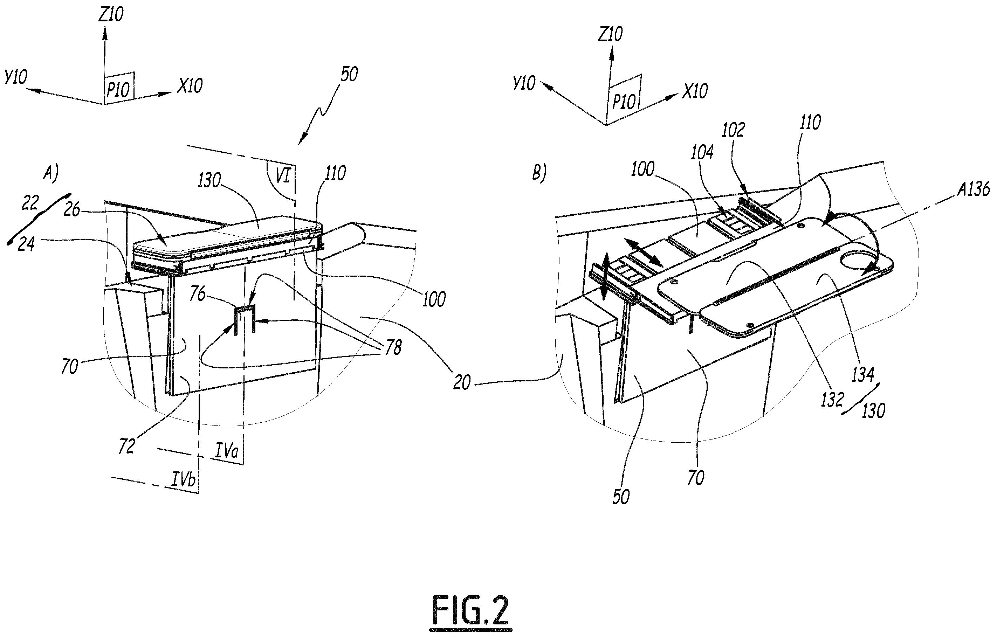

Inside the compartment V10, the side wall 14 is covered by a side panel 20, to provide comfort and safety to the user. The side panel 20 is partially shown on figure 2. When attached to the side wall 14, the side panel 20 extends globally parallel to the side wall 14, i.e. parallel to the longitudinal plane P10.

The side panel 20 comprises a protruding volume that provides an arm-resting area 22 to a user of the vehicle 10. The arm-resting area 22 is sensibly oriented upwards, i.e. orthogonal to the height axis Z10.

In the illustrated example, the arm-resting area 22 comprises a fixed portion 24, which is immobile relative to the side wall 14, and mobile portion 26, which can be adjusted in height relative to the rest of the side panel 20, i.e. along the height axis Z10, by a user. The mobile portion 26 is part of an adjustable armrest 50, also simply called armrest 50. Alternatively, the arm-resting area 22 does not comprise any fixed portion, and only the armrest 50 forms the arm-resting area 22.

The armrest 50 is described with reference to figures 2 to 7. On figure 2, the armrest 50 is represented in a raised configuration, where the mobile portion 26 of the resting area 22 is raised, along the height axis Z10, relative to the fixed portion 24. When the mobile portion 26 is aligned with the fixed portion 24, the armrest 50 is in a low configuration.

The armrest 50 comprises a bracket 60, which is configured to be fixed onto the side panel 20, and a support portion 70, which is adjustable in height relative to the bracket 60.

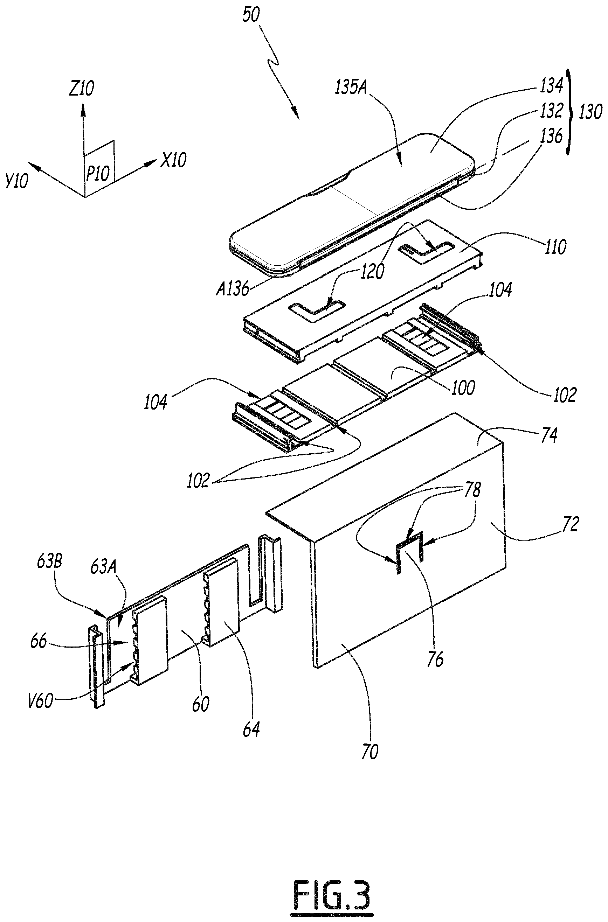

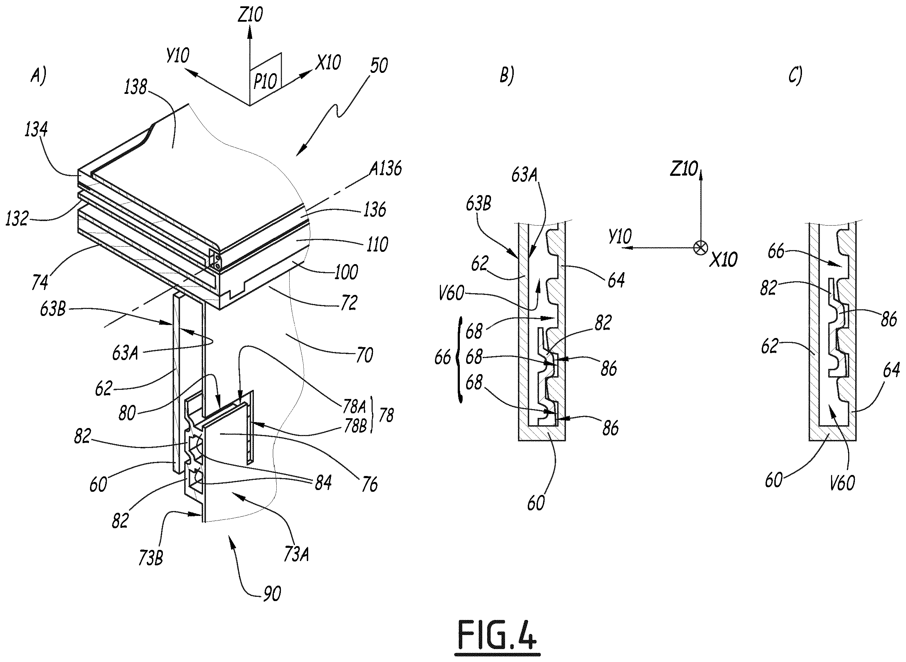

The bracket 60, which is more particularly visible on figures 3 and 4, comprises a main wall 62, which extends parallel to the side panel 20 when the bracket 20 is attached to this side panel 20, i.e. parallel to the longitudinal plane P10. The main wall 62 comprises an inner side 63A, oriented toward the interior compartment V10, and an outer side 63B, opposite to the inner side 63A, i.e. oriented toward the side wall 14 when in use.

The bracket 60 comprises a secondary wall 64, which extends parallel to the main wall 62 and faces the inner side 63A of the main wall 62. In the illustrated example, the secondary wall 64 has a rectangular shape with a longer side extending along the height axis Z10. The secondary wall 64 and the main wall 62 are limiting, between themselves, an inner volume V60 of the bracket 60.

The bracket 60 comprises a notched portion 66, which is arranged on the secondary wall 64 and which is oriented toward the inner volume V60 of the bracket 60. The notched portion 66 comprises several notches 68, which are stacked along the height axis Z10. The In the illustrated example, each notch 68 extend parallel to the longitudinal axis X10.

The support portion 70 comprises an outer wall 72, which comprises an outer face 73A, configured to be oriented toward the interior compartment V10 of the vehicle 10, and an inner face 73B, opposite to the outer face 73A. When the armrest 50 is assembled, the outer wall 72 extends parallel to the main wall 62, with the inner face 73A of the outer wall 73 facing the inner side 63A of the main wall 62. The secondary wall 64 is arranged between the main wall 62 and the outer wall 72.

The support portion 70 also comprises an upper wall 74. In the illustrated example, the outer wall 72 and the upper wall 74 are made in one piece, for example produced by hot injection of polymer material. The upper wall 74 extends orthogonally to the outer wall 72, i.e. orthogonally to the height axis Z10.

The support portion 70 comprises a flexible zone 76, which is arranged on the outer wall 72. The flexible zone 76 is accessible by a user when seating in the seat 16. In the illustrated example, the flexible zone 76 has a rectangular shape and is delimited by three cut-outs that form three sides of flexible zone 76, including an upper cut-out 78A, that extends parallel to the longitudinal axis X10, and two side cut-outs 78B, that extends parallel to the height axis Z10.

When the flexible zone 76 is subject to no external force, the flexible zone is in a relaxed configuration, as illustrated on the figures. Preferably, in the relaxed configuration the flexible zone 76 is flush with the rest of the outer wall 72. When a user exerts a force on the flexible zone 76 on the outer face 73A, in other words when a user pushes the flexible zone 76, the flexible zone 76 deforms elastically and passes to a deformed configuration. When the user stops pushing the flexible zone 76, the flexible zone 76 tends to elastically return to its relaxed configuration.

In the deformed configuration, the flexible zone 76 is moved closer to the main wall 62 and the upper cut-out 78A provides a gripping element 80 to a user. As explained hereinafter, the gripping element 80 is configured for a user to lift the support portion 70 along the height axis Z10.

The support portion 70 comprises a teethed portion 82, which is linked to the flexible zone 76 by linking members 84, as illustrated on figure 4 a). The movements of the teethed portion 82 along the transverse axis Y10 are therefore controlled by the movements of the flexible zone 76. The outer wall 72, the teethed portion 82 and the links 84 are preferably manufactured in one piece, for example by hot injection of synthetic polymer.

A part of the teethed portion 82 extends along the longitudinal axis X10 and is received in the inner volume V60 of the bracket 60 The teethed portion 82 comprises teeth 86, which extend along the longitudinal axis X10 and which are configured to cooperate, by shape complementarity, with the notches 68 of the notched portion 66, so that translation movements of the support portion 70 relative to the bracket 60 along the height axis Z10 are prevented.

When the flexible zone 76 is in the relaxed configuration, the teethed portion 82 cooperates with the notched portion 66. The teethed portion 82 is then said to be in an engaged configuration, visible on the inserts b) and c) of figure 4. When the flexible zone 76 is in the deformed configuration, the teethed portion 82 does not cooperate with the notched portion 66 and does not prevent translation movements of the support portion 70 relative to the bracket 60 along the height axis Z10. The teethed portion 82 is then said to be in a disengaged configuration.

The shape, number and arrangement of the teeth 84 and notches 68 is not limitative. In an alternative not shown, the teethed portion 82 comprises only one tooth. More generally, the teethed portion 82 forms a complementary organ configured to cooperate with the notched portion 66. The complementary organ is configured to pass from the engaged configuration, where the complementary organ cooperates with the notched portion 66 and prevents height adjustment movements of the support portion 70 relative to the bracket 60, to a disengaged configuration, where the complementary organ does not cooperates with the notched portion 66 and does not prevent height adjustment movements of the support portion 70 relative to the bracket 60.

The teethed portion 82, moved by the flexible zone 76, and the toothed portion 66 form together a mechanism 90, configured to adjust in position the support portion 70 relatively to the bracket 60 along the height axis Z10. To adjust the height of the support portion 70, a user has simply to push the flexible zone 76 in the deformed configuration, freeing the teeth 86 from the notches 68. The teethed portion 82 is then in the disengaged configuration.

Then, the user may lift the support portion 70 by exerting an upward force on the gripping element 80. Alternatively, the user by lower the support portion 70 by exerting a downward force on the gripping element 80 or on the mobile portion 26 of the arm-resting area 22.

Once the support portion 70 reaches the desired height, the user stops his effort on the flexible zone 76, which returns elastically to its relaxed configuration. At the same time, the teethed portion 82 returns to its engaged configuration, locking the position of the support portion 70. This mechanism 90 is very simple - and therefore cheap - to manufacture and easy to operate, since the user may push the flexible zone 76 by hand and without any tool.

According to another aspect of the invention, the mobile portion 26 of the arm-resting area 22 may also be adjusted in position along the transverse axis Y10.

To this end, the armrest 50 further comprises a guiding board 100, which is borne by the upper wall 74 and which comprises lateral guides 102. The lateral guides 102 are arranged along the transverse axis Y10. In other words, the lateral guides 102 are borne by the upper wall 74.

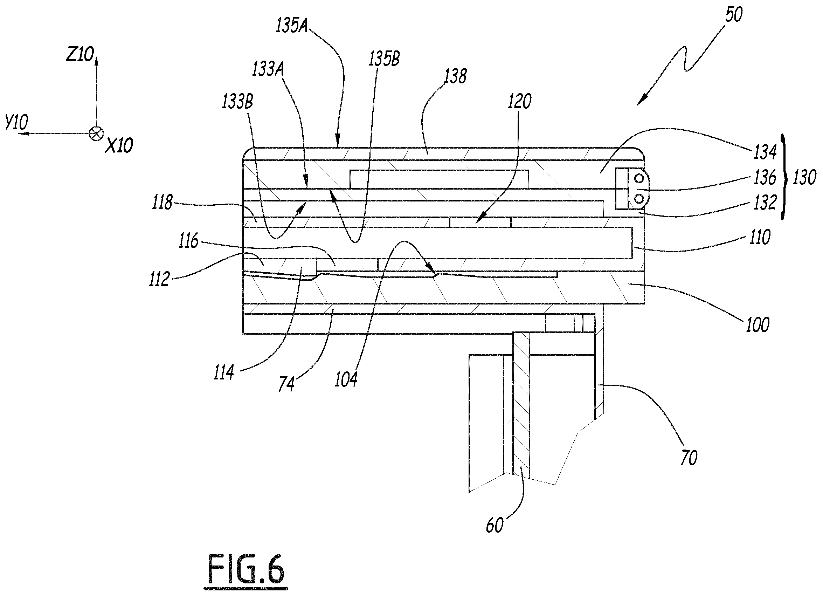

The guiding board 100 also comprises secondary notches 104. The secondary notches 104 are facing upwards, each secondary notches 104 extending parallel to each other and orthogonally to the lateral axis Y10, the secondary notches 104 being stacked along the transverse axis Y10. A section of the secondary notches 104 is visible on figure 6. In the illustrated example, the guiding board 100 comprises three secondary notches 104. The shape and numbers of the secondary notches 104 are not limitative.

The armrest 50 also comprises a sliding board 110, which cooperates with the lateral guides 102 so that the only possible movements of the sliding board 110 relative to the guiding board 100 are translation movement along the transverse axis Y10.

The sliding board 110 comprises a teethed organ 112, configured to cooperate with the secondary notches 104. In the illustrated example, the teethed organ 112 comprises a secondary teeth 114 arranged at the extremity of a flexible tab 116. The secondary teeth 114 is oriented downwards and is configured to cooperate, by shape complementarity, with the secondary notches 104. When no external force is exerted on the teethed organ 112, the teethed organ 112 is in a relaxed configuration, where the secondary teeth 114 cooperate with the secondary notches 104 and prevents translation movements of the sliding board 110 relative to the guiding board 100 along the transverse axis Y10. In other words, lateral adjustment of the sliding board 110 is prevented.

When a user exerts an upward force on the secondary teeth 114, the teethed organ 112 is in a constrained configuration, where the flexible tab 116 deforms elastically and the secondary teeth 114 do not cooperate with the secondary notches 104. In other words, the translation movements of the sliding board 110 relative to the guiding board 100 along the transverse axis Y10 are allowed. The user may then move the lateral position of the sliding board 110 relative to the guiding board to the position of his choice.

When the user stops exerting an upward force on the secondary teeth, the teethed organ 112 returns elastically to its relaxed configuration. In other words, lateral adjustment movements of the sliding board are prevented.

The teethed organ 112 and the secondary notches 104 form together a secondary mechanism, configured to adjust in position the sliding board 110 relative to the guiding portion 100 - and by extension to the upper wall 74 - along the transverse axis Y10.

The guiding board 110 comprises an upper wall 118, which extends parallel to the flexible tab 116 and which comprises guiding grooves 120. Each guiding groove 120 extends along a path and has two extremities, with a starting extremity 122A and an ending extremity 122B. The guiding grooves 120 have the same shape.

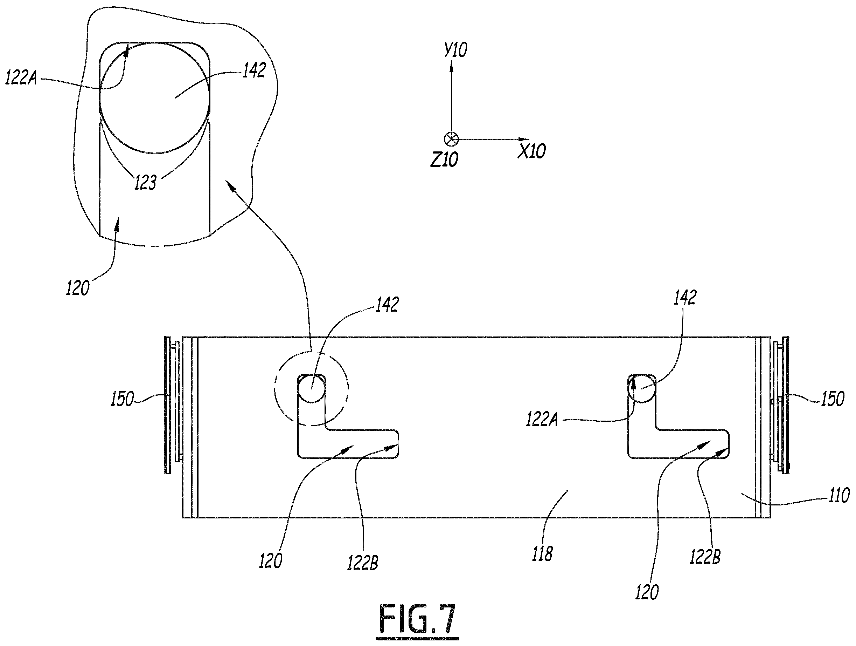

As illustrated on figure 7, the guiding grooves 120 extend here along a path that is L-shaped, with a portion parallel to the transverse axis Y10 and a portion parallel to the longitudinal axis X10. Other shapes are possible for the guiding grooves 120.

The armrest 50 also comprises a tray 130. The tray 130 comprises a lower board 132, an upper board 134 and a hinge 136 that links the upper board 134 to the lower board 132. In other words. The hinge 136 extends along a hinge axis A136, which is parallel to the longitudinal axis X10. In other words, the upper board 134 is hinged with the lower board 132 along the hinge axis A136, while the tray 130 is a foldable tray.

The tray 130 is switchable, by a user, between a folded configuration, where the upper board 134 is folded onto the lower board 132 and forms the mobile portion 26 of the arm-resting area 22, and an unfolded configuration, where the upper board 134 extends next to and parallel to the lower board 132, the upper and lower boards forming together a tray for the user.

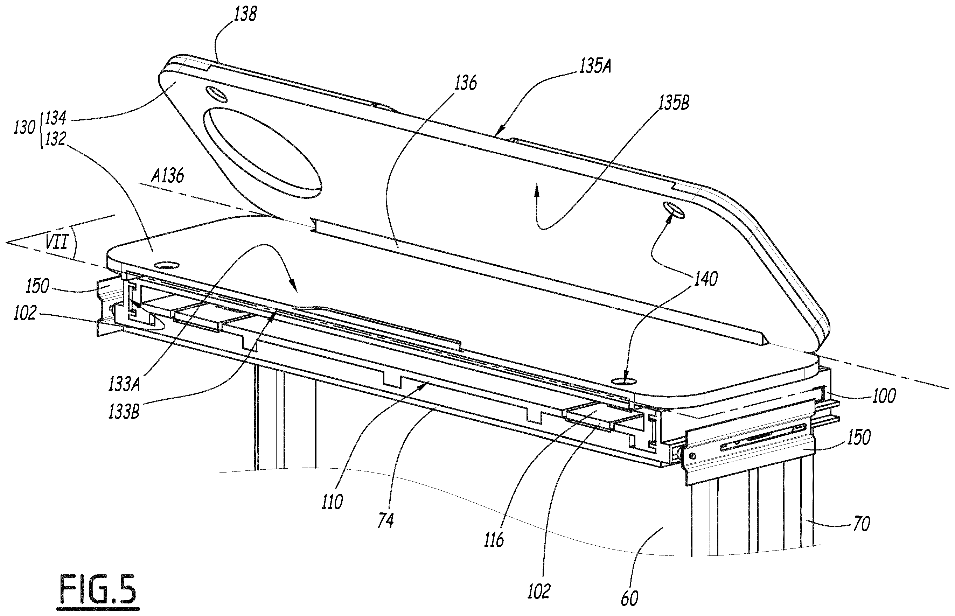

On figure 5, the tray 130 is represented in an intermediate configuration, between the folded and the unfolded configuration. The lower board 132 has a top side 133A, which is oriented upwards when the armrest 50 is assembled, and a down side 133B, which is opposed to the top side 133A, i.e. oriented downwards. The upper board 134 has a top side 135A, which is oriented upwards when the tray 130 is in the folded configuration, and a down side 135B, which is opposed to the top side 135A of the upper board 134, i.e. oriented downwards when the tray 130 is in the folded configuration.

When the tray 130 is in the unfolded configuration, the orientation of the upper board 134 is reversed, i.e. the top side 135A is oriented downwards, while the down side 135A of the upper board 134 is oriented upwards. Preferably, in the unfolded configuration of the tray 130 the top side 133A of the under board 132 and the down side 135B of the upper board 134 are borne by a geometric plane that is orthogonal to the height axis Z10, so as to provide a flat tray surface to the user.

Preferably, the upper board 134 comprises a layer made of soft material, for example a cushioned layer 138, which covers the upper side 135A of the upper board 134. Advantageously, the top surface 133A of the lower board 132 and the down surface 135B of the upper board 134 comprise slots 140, which face each other in the folded configuration and which are configured to receive magnets, configured to maintain the tray 130 in the folded configuration. The magnets are not represented.

The tray 130 also comprises pins 142, which are arranged on the down side 133B of the lower tray 132 and which are configured to cooperate, by shape complementarity, with the guiding grooves 120, so that the pins 142 are configured to travel, under the action of a user, within the guiding grooves 120. In other words, movements of the tray 130 relative to the sliding board 110 are determined by the shape of the grooves 120, which receive the pins 142. The pins 142 and the groove 120 give the user an additional possibility of position adjustment, in addition to the position adjustments previously described, along the height axis Z10 or along the transverse axis Y10.

Advantageously, protrusions 123 are arranged within each guiding groove 120, the protrusions 123 being configured to prevent movements of the pins 142 within the grooves 120 when the pins 142 are in a starting position, where the pins 142 are in contact with the starting extremity 122A. When the user moves the tray along the guiding grooves 120, the protrusions 123 are deformed elastically to accommodate the passage of the pins 142.

The armrest 50 also comprises two stabilizers 150, which are visible on figures 5, 7 and 8. The stabilizers 150 are arranged on each side of the support portion 70 along the longitudinal axis X10. The stabilizers 150 are configured to stabilize support portion 70 when the support portion 70 is adjusted in position relative to the bracket 60 along the height axis Z10. In particular, the stabilizers 150 are configured to prevent the translation movements of the support portion 70 relative to the bracket 60 along the longitudinal axis X10.

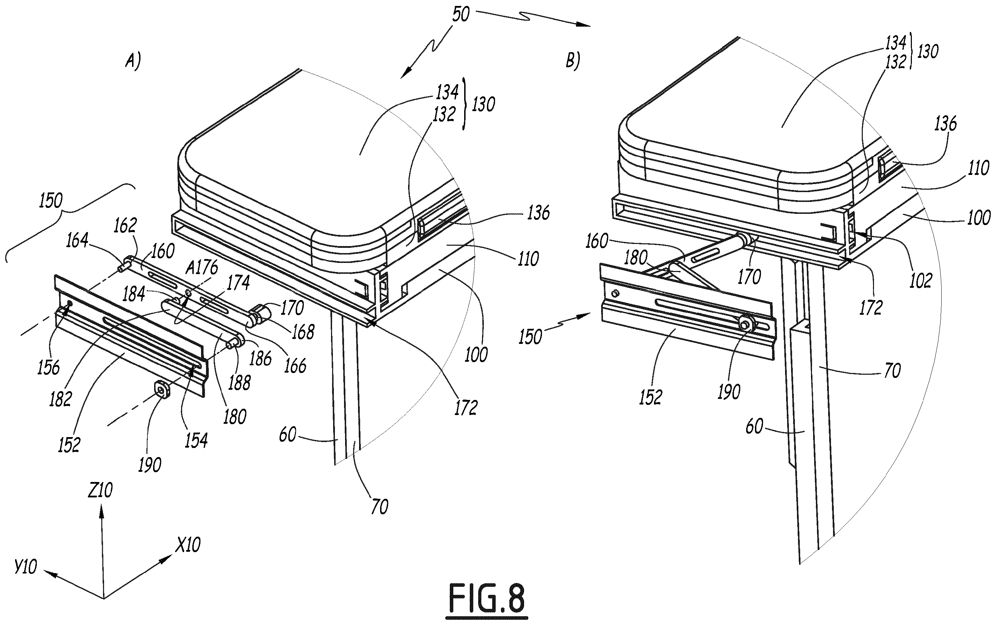

The two stabilizers 150 are preferably identical to each other. The stabilizer 150 shown on figure 8 is now described.

The stabilizer 150 comprises a rail 152, which extends along the transverse axis Y10 and which has here an Omega-shaped section. When the armrest 50 is assembled to the side panel 20, the rail 152 is fixed to the side panel 20. An oblong hole 154 that extends along the transverse axis Y20 is arranged in a central portion of the rail 152, while an axis hole 156 is arranged at an extremity of the central portion of the rail 152.

The stabilizer also comprises a main rod 160, which comprises a first end 162 with a first stud 164 received in the axis hole 156, so that the main rod 160 is able to rotate relative to the rail 152 along a rotation axis parallel to the longitudinal axis X10. The main rod 160 also comprises a second end 166, which is opposite to the first end 162 and which comprises a second stud 168, which extends parallel to the first stud 164 and which is arranged on an opposite side to the first stud 164 relative to the main rod 160. A sliding roller 170 is arranged on the second stud 168. The sliding roller 170 is received in a slide groove 172, which is arranged on the support portion 70 along the transverse axis Y20. In the illustrated example, the slide groove 172 has a rectangular section and is arranged on the sliding board 100.

The main rod 160 also comprises a central hole 174, which is arranged in a middle portion of the main road 160 between the first end 162 and the second end 166, preferably in the middle of the main rod 160. The central hole 174 is centered along an axis A176 parallel to the longitudinal axis X10.

The stabilizer 150 also comprises a second rod 180, with a first extremity 182 comprising a first stud 184 received in the central hole 174, so that the second rod 180 is mobile in rotation relative to the main rod 160 along the axis A176 of the central hole 174. The second rod 180 comprises a second extremity 184, which is opposite to the first extremity 182 and which comprises a second stud 188 that is received slidingly in the oblong hole 154. A nut 190 is fitted to the second stud 188 so that the second stud 188 is captured in the oblong hole 154.

When the height of the bearing portion 70 is adjusted relative to the bracket 60, the sliding groove 172 drags the sliding roller 170, which slides within the sliding groove 172. As the main rod 160 rotates relative to the rail 152, the main rod 160 also drags the second rod 180 by its first extremity 182, while the second stud 188 of the second extremity 186 of the second rod 180 slides along the oblong hole 154.

In the illustrated example, the lateral guides are arranged in the guiding board, which is distinct from and assembled to the upper wall, for example by using fixing elements such as screws or by welting or gluing. Alternatively, the guiding board and the upper wall are manufactured in one piece. In both case, the lateral guides are borne by the upper wall.

In the illustrated example, the notched portion is arranged on the bracket, while the teethed portion is arranged on the support portion.

In a not shown alternative, a mirror arrangement is selected, with the notched portion arranged on the support portion, while the teethed portion is arranged on the bracket. In any case, the flexible zone remains accessible to the user from the interior compartment V10.

The respective features of the different embodiments and variants of the device considered in this description can be combined to create new embodiments, within the scope of the appended claims.

## Claims

1. An armrest (50) for a side panel (20) of a vehicle (10), especially a road vehicle, the armrest (50) comprising:
- a bracket (60), comprising a main wall (62) configured to be fixed onto the side panel (20),
- a support portion (70) comprising:
• an outer wall (72), which extends parallel to the main wall (62) and which comprises an outer face (73A), oriented toward an interior compartment (V10) of the vehicle (10), and
• an upper wall (74), which extends orthogonally to a height axis (Z10) of the vehicle and which is configured to provide an arm-resting (26) area to a user of the vehicle,
- a mechanism, configured to adjust in height the support portion (70) relatively to the bracket (60) along the height axis (Z10),
wherein:
- the mechanism comprises a notched portion (66), which is arranged on one element among the bracket (60) and the support portion (70) and which comprises notches (68), which are stacked along the height axis (Z10),
- the notched portion (66) is configured to cooperate with a complementary organ (82), for example a teethed portion, which is arranged on the other element among the bracket (60) and the support portion (70),
- the complementary organ (82) is configured to pass from an engaged configuration, where the complementary organ (82) cooperates with the notched portion (66) and prevents height adjustment movements of the support portion (70) relative to the bracket (60), to a disengaged configuration, where the complementary organ (82) does not cooperates with the notched portion (66) and does not prevent height adjustment movements of the support portion (70) relative to the bracket (60),
- the adjustment mechanism comprises a flexible zone (76), arranged either on the bracket (60) or on the support portion (70), the flexible zone (76) being configured to switch between a relaxed configuration, where the complementary organ (82) is in the engaged configuration, and a deformed configuration, where the complementary organ (82) is moved in the disengaged configuration, and
- the flexible zone (76) is configured to pass from the relaxed configuration to the deformed configuration by elastic deformation under the action of an user, by hand and without any tool, whereas the flexible zone (76) tends to elastically return to its relaxed configuration,
wherein
- the bracket (60) comprises a secondary wall (64), which extends parallel to the main wall (62) between the outer wall (72) and the main wall (62), the secondary wall (64) and the main wall (62) limiting between themselves an inner volume (V60) of the bracket (60), **characterized in that**
- the notched portion (66) is arranged on the secondary wall (64) and is oriented toward the inner volume (V60) of the bracket (60),
- the complementary organ is a teethed portion (82), which is received in the inner volume (V60) of the bracket (60).

2. The armrest (50) according to claim 1, wherein:
- the notched portion (66) is arranged on the bracket (60),
- the complementary organ (82) is arranged on the support portion (70),
- the flexible zone (76) is arranged on the outer wall (72) and is configured to provide a gripping element (80) when the flexible zone (76) is in the deformed configuration, the gripping element (80) being configured for a user to lift the support portion (70) along the height axis (Z10).

3. The armrest (50) according to any one of claims 1 or 2, wherein the support portion (70) further comprises:
- lateral guides (102), which are borne by the upper wall (74) and which arranged along a transverse axis orthogonal to the outer wall (72),
- a sliding board (110), which cooperates with the lateral guides (102) and which is mobile in translation relatively to the support portion (70) along a transverse axis (Y10), which is orthogonal to the outer wall (72), and
- a secondary mechanism, configured to adjust in position the sliding board (110) relative to the upper wall (74) along the transverse axis (Y10), in a lateral adjustment movement,
wherein:
- the secondary mechanism comprises:
• secondary notches (104), which are borne by the upper wall (74) and which are facing upwards, each secondary notches (104) extending parallel to each other and orthogonally to the transverse axis (Y10), the secondary notches (104) being stacked along the transverse axis (Y10),
• a teethed organ (112), which is arranged on the sliding board (110), the teethed organ (112) having a secondary teeth (114) being oriented downwards and being configured to cooperate with the secondary notches (104),
- the teethed organ (112) is elastically deformable, by a user, between a relaxed configuration and a constrained configuration, the teethed organ (112) being configured to elastically return to its relaxed configuration,
- when the teethed organ (112) is in the relaxed configuration; the teethed organ (112) cooperates with the secondary notches (104) so that lateral adjustment movements of the sliding board (110) are prevented,
- when the teethed organ (112) is in the constrained configuration, the teethed organ (112) does not cooperate with the secondary notches (104) and lateral adjustment movements of the sliding board (110) are possible.

4. The armrest (50) according to any one of claims 1 to 3, wherein:
- the support portion (70) comprises a foldable tray (130), with a lower board (132) and an upper board (134), which is hinged with the lower board (132) along a hinge axis (A136) that is parallel to a longitudinal axis (X10) of the vehicle (10),
- the lower board is borne by and parallel to the upper wall (74),
- the tray (130) is switchable, by a user, between a folded configuration, where the upper board (134) is folded onto the lower board (132) and forms an arm-resting area (26) for the user, and an unfolded configuration, where the upper board (134) extends next to the lower board (132), the upper and lower boards forming together a tray for the user.

5. The armrest (50) according to claim 4, wherein:
- the foldable tray (130) comprises pins (142), which are arranged on an under side (133B) of the lower board (132),
- the support portion (70) comprises guiding grooves (120), which receive the pins (142), the pins being configured to travel within the guiding grooves (120) under the action of a user.

6. The armrest (50) according to claim 5, wherein the guiding grooves (120) are L-shaped, with a portion arranged parallel to the transverse axis (Y10) and a portion arranged parallel to the longitudinal axis (X10).

7. The armrest (50) according to any one of claims 1 to 6, wherein the armrest also comprises two stabilizers (150), which are arranged on both sides of the armrest and which are configured to prevent translation movements of the bearing portion (70) relative to the bracket (60) along the longitudinal axis (X10).

8. A side panel (20) of a vehicle (10), comprising an armrest (50) according to any one of claims 1 to 7.

9. A vehicle (10), comprising a body (12) with side walls (14) that delimit an interior compartment (V10) of the vehicle, wherein at least one of the side walls (14) is covered by a side panel (20) according to claim 8.

## Patentansprüche

1. Armlehne (50) für eine Seitenwand (20) eines Fahrzeugs (10), insbesondere eines Straßenfahrzeugs, die Armlehne (50) umfassend:
- eine Halterung (60), umfassend eine Hauptwand (62), die konfiguriert ist, um an der Seitenwand (20) befestigt zu werden,
- einen Trägerabschnitt (70), umfassend:
• eine Außenwand (72), die sich parallel zu der Hauptwand (62) erstreckt und die eine Außenfläche (73A) umfasst, die zu einem Innenraum (V10) des Fahrzeugs (10) hin ausgerichtet ist, und
• eine obere Wand (74), die sich orthogonal zu einer Höhenachse (Z10) des Fahrzeugs erstreckt und die konfiguriert ist, um einem Benutzer des Fahrzeugs einen Armauflagebereich (26) bereitzustellen,
- einen Mechanismus, der konfiguriert ist, um den Trägerabschnitt (70) in Bezug auf die Halterung (60) entlang der Höhenachse (Z10) in der Höhe zu verstellen,
wobei:
- der Mechanismus einen gekerbten Abschnitt (66) umfasst, der an einem Element zwischen der Halterung (60) und dem Trägerabschnitt (70) angeordnet ist und der Kerben (68) umfasst, die entlang der Höhenachse (Z10) gestapelt sind,
- der gekerbte Abschnitt (66) konfiguriert ist, um mit einem komplementären Element (82), zum Beispiel einem gezahnten Abschnitt, zusammenzuwirken, das auf dem anderen Element zwischen der Halterung (60) und dem Trägerabschnitt (70) angeordnet ist,
- das komplementäre Element (82) konfiguriert ist, um von einer Eingriffskonfiguration, in der das komplementäre Element (82) mit dem eingekerbten Abschnitt (66) zusammenwirkt und Höheneinstellbewegungen des Trägerabschnitts (70) in Bezug auf die Halterung (60) verhindert, in eine Nichteingriffskonfiguration überzugehen, in der das komplementäre Element (82) nicht mit dem gekerbten Abschnitt (66) zusammenwirkt und Höheneinstellbewegungen des Trägerabschnitts (70) in Bezug auf die Halterung (60) nicht verhindert,
- der Einstellmechanismus einen flexiblen Bereich (76) umfasst, der entweder auf der Halterung (60) oder auf dem Trägerabschnitt (70) angeordnet ist, wobei der flexible Bereich (76) so konfiguriert ist, dass er zwischen einer entspannten Konfiguration, in der das komplementäre Element (82) in der Eingriffskonfiguration ist, und einer verformten Konfiguration, in der das komplementäre Element (82) in die Nichteingriffskonfiguration bewegt wird, umschaltet, und
- der flexible Bereich (76) konfiguriert ist, um durch elastische Verformung unter der Einwirkung eines Benutzers, von Hand und ohne Werkzeug, von der entspannten Konfiguration in die verformte Konfiguration überzugehen, während der flexible Bereich (76) dazu neigt, elastisch in seine entspannte Konfiguration zurückzukehren,
wobei
- die Halterung (60) eine sekundäre Wand (64) aufweist, die sich zwischen der Außenwand (72) und der Hauptwand (62) parallel zu der Hauptwand (62) erstreckt, wobei die sekundäre Wand (64) und die Hauptwand (62) untereinander ein Innenvolumen (V60) der Halterung (60) begrenzen, **dadurch gekennzeichnet, dass**
- der gekerbte Abschnitt (66) an der sekundären Wand (64) angeordnet und auf das Innenvolumen (V60) der Halterung (60) ausgerichtet ist,
- das komplementäre Element ein gezahnter Abschnitt (82) ist, der in dem Innenvolumen (V60) der Halterung (60) aufgenommen ist.

2. Armlehne (50) nach Anspruch 1, wobei:
- der gekerbte Abschnitt (66) an der Halterung (60) angeordnet ist,
- das komplementäre Element (82) auf dem Trägerabschnitt (70) angeordnet ist,
- der flexible Bereich (76) an der Außenwand (72) angeordnet und konfiguriert ist, um ein Greifelement (80) bereitzustellen, wenn der flexible Bereich (76) in der verformten Konfiguration ist, wobei das Greifelement (80) konfiguriert ist, damit ein Benutzer den Trägerabschnitt (70) entlang der Höhenachse (Z10) anheben kann.

3. Armlehne (50) nach einem der Ansprüche 1 oder 2, wobei der Trägerabschnitt (70) ferner Folgendes umfasst:
- seitliche Führungen (102), die von der oberen Wand (74) getragen werden und die entlang einer Querachse orthogonal zu der Außenwand (72) angeordnet sind,
- ein Gleitbrett (110), das mit den seitlichen Führungen (102) zusammenwirkt und in Bezug auf den Trägerabschnitt (70) entlang einer zu der Außenwand (72) orthogonalen Querachse (Y10) verschiebbar ist, und
- einen sekundären Mechanismus, der konfiguriert ist, um eine Position des Gleitbretts (110) in Bezug auf die obere Wand (74) entlang der Querachse (Y10) in einer seitlichen Einstellbewegung einzustellen,
wobei:
- der sekundäre Mechanismus Folgendes umfasst:
• sekundäre Kerben (104), die von der oberen Wand (74) getragen werden und nach oben gerichtet sind, wobei sich jede sekundäre Kerbe (104) parallel zueinander und orthogonal zu der Querachse (Y10) erstreckt und die sekundären Kerben (104) entlang der Querachse (Y10) gestapelt sind,
• ein Verzahnungselement (112), das auf dem Gleitbrett (110) angeordnet ist, wobei das Verzahnungselement (112) eine sekundäre Verzahnung (114) aufweist, die nach unten gerichtet und konfiguriert ist, um mit den sekundären Kerben (104) zusammenzuwirken,
- das Verzahnungselement (112) durch einen Benutzer zwischen einer entspannten Konfiguration und einer eingeschränkten Konfiguration elastisch verformbar ist, wobei das Verzahnungselement (112) konfiguriert ist, um elastisch in seine entspannte Konfiguration zurückzukehren,
- wenn das Verzahnungselement (112) in der entspannten Konfiguration ist; das Verzahnungselement (112) mit den sekundären Kerben (104) zusammenwirkt, sodass seitliche Einstellbewegungen des Gleitbretts (110) verhindert werden,
- wenn das Verzahnungselement (112) in der eingeschränkten Konfiguration ist, das Verzahnungselement (112) nicht mit den sekundären Kerben (104) zusammenwirkt und seitliche Verstellbewegungen des Gleitbretts (110) möglich sind.

4. Armlehne (50) nach einem der Ansprüche 1 bis 3, wobei:
- der Trägerabschnitt (70) eine klappbare Ablage (130) mit einer unteren Platte (132) und einer oberen Platte (134), die entlang einer Scharnierachse (A136), die parallel zu einer Längsachse (X10) des Fahrzeugs (10) ist, gelenkig mit der unteren Platte (132) verbunden ist, umfasst,
- die untere Platte von der oberen Wand (74) getragen wird und parallel dazu ist,
- die Ablage(130) durch einen Benutzer zwischen einer gefalteten Konfiguration, in der das obere Brett (134) auf das untere Brett (132) gefaltet ist und einen Armauflagebereich (26) für den Benutzer bildet, und einer ungefalteten Konfiguration, in der sich das obere Brett (134) neben dem unteren Brett (132) erstreckt, umschaltbar ist, wobei das obere und das untere Brett zusammen eine Ablage für den Benutzer bilden.

5. Armlehne (50) nach Anspruch 4, wobei:
- die klappbare Ablage (130) Stifte (142) umfasst, die auf einer Unterseite (133B) der unteren Platte (132) angeordnet sind,
- der Trägerabschnitt (70) Führungsnuten (120) umfasst, die die Stifte (142) aufnehmen, wobei die Stifte konfiguriert sind, um sich unter der Einwirkung eines Benutzers innerhalb der Führungsnuten (120) zu bewegen.

6. Armlehne (50) nach Anspruch 5, wobei die Führungsnuten (120) L-förmig sind, wobei ein Abschnitt parallel zu der Querachse (Y10) angeordnet ist und ein Abschnitt parallel zu der Längsachse (X10) angeordnet ist.

7. Armlehne (50) nach einem der Ansprüche 1 bis 6, wobei die Armlehne auch zwei Stabilisatoren (150) umfasst, die auf beiden Seiten der Armlehne angeordnet sind und die konfiguriert sind, um Translationsbewegungen des Lagerabschnitts (70) in Bezug auf der Halterung (60) entlang der Längsachse (X10) zu verhindern.

8. Seitenwand (20) eines Fahrzeugs (10), umfassend eine Armlehne (50) nach einem der Ansprüche 1 bis 7.

9. Fahrzeug (10), umfassend eine Karosserie (12) mit Seitenwänden (14), die einen Innenraum (V10) des Fahrzeugs begrenzen, wobei mindestens eine der Seitenwände (14) durch eine Seitenwand (20) nach Anspruch 8 abgedeckt ist.

## Revendications

1. Accoudoir (50) pour un panneau latéral (20) d'un véhicule (10), en particulier un véhicule routier, l'accoudoir (50) comprenant :
- un support (60), comprenant une paroi principale (62) configurée pour être fixée sur le panneau latéral (20),
- une partie de support (70) comprenant :
• une paroi extérieure (72), qui s'étend parallèlement à la paroi principale (62) et qui comprend une face extérieure (73A), orientée vers un compartiment intérieur (V10) du véhicule (10), et
• une paroi supérieure (74), qui s'étend perpendiculairement à un axe de hauteur (Z10) du véhicule et qui est configurée pour fournir une zone d'appui pour les bras (26) à un utilisateur du véhicule,
- un mécanisme configuré pour ajuster en hauteur la partie de soutien (70) par rapport au support (60) le long de l'axe de hauteur (Z10),
dans lequel :
- le mécanisme comprend une partie crantée (66), qui est disposée sur un élément parmi le support (60) et la partie de soutien (70) et qui comprend des crans (68), qui sont empilés le long de l'axe de hauteur (Z10),
- la partie crantée (66) est configurée pour coopérer avec un organe complémentaire (82), par exemple une partie dentée, qui est disposée sur l'autre élément parmi le support (60) et la partie de soutien (70),
- l'organe complémentaire (82) est configuré pour passer d'une configuration enclenchée, dans laquelle l'organe complémentaire (82) coopère avec la partie crantée (66) et empêche les mouvements de réglage en hauteur de la partie de soutien (70) par rapport au support (60), à une configuration désenclenchée, dans laquelle l'organe complémentaire (82) ne coopère pas avec la partie crantée (66) et n'empêche pas les mouvements de réglage en hauteur de la partie de soutien (70) par rapport au support (60),
- le mécanisme de réglage comprend une zone flexible (76), disposée soit sur le support (60) soit sur la partie de soutien (70), la zone flexible (76) étant configurée pour passer d'une configuration détendue, dans laquelle l'organe complémentaire (82) est dans la configuration enclenchée, à une configuration déformée, dans laquelle l'organe complémentaire (82) est déplacé dans la configuration désenclenchée, et
- la zone flexible (76) est configurée pour passer de la configuration détendue à la configuration déformée par déformation élastique sous l'action d'un utilisateur, à la main et sans outil, tandis que la zone flexible (76) tend à revenir élastiquement à sa configuration détendue,
dans lequel
- le support (60) comprend une paroi secondaire (64) qui s'étend parallèlement à la paroi principale (62) entre la paroi extérieure (72) et la paroi principale (62), la paroi secondaire (64) et la paroi principale (62) limitant entre elles un volume intérieur (V60) du support (60), **caractérisé en ce que**
- la partie crantée (66) est disposée sur la paroi secondaire (64) et est orientée vers le volume intérieur (V60) du support (60),
- l'organe complémentaire est une partie dentée (82), qui est reçue dans le volume intérieur (V60) du support (60).

2. Accoudoir (50) selon la revendication 1, dans lequel :
- la partie crantée (66) est disposée sur le support (60),
- l'organe complémentaire (82) est disposé sur la partie de soutien (70),
- la zone flexible (76) est disposée sur la paroi extérieure (72) et est configurée pour fournir un élément de préhension (80) lorsque la zone flexible (76) est dans la configuration déformée, l'élément de préhension (80) étant configuré pour qu'un utilisateur soulève la partie de soutien (70) le long de l'axe de hauteur (Z10).

3. Accoudoir (50) selon l'une quelconque des revendications 1 ou 2, dans lequel la partie de soutien (70) comprend en outre :
- des guides latéraux (102), qui sont portés par la paroi supérieure (74) et qui sont disposés le long d'un axe transversal perpendiculaire à la paroi extérieure (72),
- une planche coulissante (110), qui coopère avec les guides latéraux (102) et qui est mobile en translation par rapport à la partie de soutien (70) le long d'un axe transversal (Y10), qui est perpendiculaire à la paroi extérieure (72), et
- un mécanisme secondaire, configuré pour ajuster la position de la planche coulissante (110) par rapport à la paroi supérieure (74) le long de l'axe transversal (Y10), dans un mouvement d'ajustement latéral,
dans lequel :
- le mécanisme secondaire comprend :
• des encoches secondaires (104), portées par la paroi supérieure (74) et orientées vers le haut, chaque encoche secondaire (104) s'étendant parallèlement l'une à l'autre et perpendiculairement à l'axe transversal (Y10), les encoches secondaires (104) étant empilées le long de l'axe transversal (Y10),
• un organe denté (112), qui est disposé sur la planche coulissante (110), l'organe denté (112) présentant des dents secondaires (114) orientées vers le bas et configurées pour coopérer avec les encoches secondaires (104),
- l'organe denté (112) est élastiquement déformable, par un utilisateur, entre une configuration détendue et une configuration contrainte, l'organe denté (112) étant configuré pour revenir élastiquement à sa configuration détendue,
- lorsque l'organe denté (112) est en configuration détendue, il coopère avec les encoches secondaires (104) de manière à empêcher les mouvements de réglage latéraux de la planche coulissante (110),
- lorsque l'organe denté (112) est dans la configuration contrainte, il ne coopère pas avec les encoches secondaires (104) et des mouvements d'ajustement latéraux de la planche coulissante (110) sont possibles.

4. Accoudoir (50) selon l'une quelconque des revendications 1 à 3, dans lequel :
- la partie de soutien (70) comprend un plateau pliable (130), avec une planche inférieure (132) et une planche supérieure (134), qui est articulée avec la planche inférieure (132) le long d'un axe de charnière (A136) parallèle à l'axe longitudinal (X10) du véhicule (10),
- la planche inférieure est portée par la paroi supérieure et parallèle à celle-ci (74),
- le plateau (130) peut être commuté, par un utilisateur, entre une configuration pliée, dans laquelle la planche supérieure (134) est pliée sur la planche inférieure (132) et forme une zone d'appui pour les bras (26) de l'utilisateur, et une configuration dépliée, dans laquelle la planche supérieure (134) s'étend à côté de la planche inférieure (132), les planches supérieure et inférieure formant ensemble un plateau pour l'utilisateur.

5. Accoudoir (50) selon la revendication 4, dans lequel :
- le plateau pliable (130) comprend des broches (142), qui sont disposées sur une face inférieure (133B) de la planche inférieure (132),
- la partie de soutien (70) comprend des rainures de guidage (120) qui reçoivent les broches (142), les broches étant configurées pour se déplacer dans les rainures de guidage (120) sous l'action d'un utilisateur.

6. Accoudoir (50) selon la revendication 5, dans lequel les rainures de guidage (120) sont en forme de L, avec une partie disposée parallèlement à l'axe transversal (Y10) et une partie disposée parallèlement à l'axe longitudinal (X10).

7. Accoudoir (50) selon l'une quelconque des revendications 1 à 6, dans lequel l'accoudoir comprend également deux stabilisateurs (150), qui sont disposés de part et d'autre de l'accoudoir et qui sont configurés pour empêcher les mouvements de translation de la partie porteuse (70) par rapport au support (60) le long de l'axe longitudinal (X10).

8. Panneau latéral (20) d'un véhicule (10), comprenant un accoudoir (50) selon l'une quelconque des revendications 1 à 7.

9. Véhicule (10), comprenant une carrosserie (12) avec des parois latérales (14) qui délimitent un compartiment intérieur (V10) du véhicule, dans lequel au moins une des parois latérales (14) est recouverte par un panneau latéral (20) selon la revendication 8.
